(19) Europäisches Patentamt
European Patent Office
Office européen des brevets

(11) **EP 2 870 005 B1**

(12) **FASCICULE DE BREVET EUROPEEN**

(45) Date de publication et mention de la délivrance du brevet:
**08.08.2018 Bulletin 2018/32**

(21) Numéro de dépôt: **13733276.3**

(22) Date de dépôt: **27.06.2013**

(51) Int Cl.:
***B60C 11/00*** *(2006.01)*    *B60C 1/00 (2006.01)*

(86) Numéro de dépôt international:
**PCT/EP2013/063535**

(87) Numéro de publication internationale:
**WO 2014/005927 (09.01.2014 Gazette 2014/02)**

(54) **PNEUMATIQUE COMPORTANT UNE BANDE DE ROULEMENT CONSTITUEE DE PLUSIEURS MELANGES ELASTOMERIQUES**

LUFTREIFEN MIT LAUFSTREIFEN AUS MEHREREN ELASTOMERMISCHUNGEN

PNEUMATIC TIRE WITH TREAD BAND MADE OF SEVERAL ELASTOMERIC MIXTURES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.07.2012 FR 1256486**

(43) Date de publication de la demande:
**13.05.2015 Bulletin 2015/20**

(73) Titulaire: **COMPAGNIE GENERALE DES ETABLISSEMENTS MICHELIN**
**63000 Clermont-Ferrand (FR)**

(72) Inventeurs:
• **BONDU, Lucien**
**F-63040 Clermont-Ferrand Cedex 9 (FR)**

• **HARLE, François**
**F-63040 Clermont-Ferrand Cedex 9 (FR)**
• **GONCALVES, Olivier**
**F-63040 Clermont-Ferrand Cedex 9 (FR)**
• **BELIN, Cécile**
**F-63040 Clermont-Ferrand Cedex 9 (FR)**

(74) Mandataire: **Le Cam, Stéphane Georges Elie et al**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 0 798 142    EP-A1- 1 431 078**
**EP-A1- 2 067 637    WO-A1-99/16600**
**FR-A1- 2 952 855**

**Description**

L'invention concerne un pneumatique à armature de carcasse radiale destiné à équiper un véhicule lourd tel qu'un véhicule de transport ou un engin de « Génie Civil ». Il s'agit notamment d'un pneumatique qui présente une largeur axiale supérieure à 37 pouces.

Bien que non limité à ce type d'application, l'invention sera plus particulièrement décrite en référence à un véhicule de type « dumper » d'une masse supérieure à 300 tonnes, équipé de pneumatiques de diamètre supérieur à trois mètres cinquante présentant une largeur axiale supérieure à 37 pouces.

Un tel pneumatique, destiné généralement à porter de lourdes charges, comprend une armature de carcasse radiale, et une armature de sommet composée d'au moins deux nappes de sommet de travail, formées d'éléments de renforcement inextensibles, croisés d'une nappe à la suivante et faisant avec la direction circonférentielle des angles égaux ou inégaux, et compris entre 10 et 45°.

Concernant la conception habituelle des pneumatiques pour engin de génie civil, l'armature de carcasse radiale, ancrée dans chaque bourrelet, est composée d'au moins une couche d'éléments de renforcement métalliques, les dits éléments étant sensiblement parallèles entre eux dans la couche. L'armature de carcasse est habituellement surmontée d'une armature de sommet composée d'au moins deux couches de sommet de travail d'éléments de renforcement métalliques, mais croisés d'une couche à la suivante en faisant avec la direction circonférentielle des angles compris entre 10 et 65°. Entre l'armature de carcasse et les couches de sommet de travail, on trouve habituellement deux couches d'éléments de renforcements, croisés d'une nappe à la suivante et présentant des angles inférieures à 12° ; la largeur de ces couches d'éléments de renforcement est habituellement inférieure à celles des couches de travail. Radialement à l'extérieur des couches de travail, on trouve encore des couches de protection dont les éléments de renforcement présentent des angles compris entre 10 et 65°.

Radialement à l'extérieur de l'armature de sommet, on trouve la bande de roulement habituellement constituée de matériaux polymériques destinés à venir au contact du sol dans l'aire de contact entre le sol et le pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

La direction circonférentielle du pneumatique, ou direction longitudinale, est la direction correspondant à la périphérie du pneumatique et définie par la direction de roulement du pneumatique.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

La direction transversale ou axiale du pneumatique est parallèle à l'axe de rotation du pneumatique. Une distance axiale est mesurée selon la direction axiale. L'expression « axialement intérieur à, respectivement axialement extérieur à» signifie « dont la distance axiale mesurée depuis le plan équatorial est inférieure à, respectivement supérieure à ».

La direction radiale est une direction coupant l'axe de rotation du pneumatique et perpendiculaire à celui-ci. Une distance radiale est mesurée selon la direction radiale. L'expression « radialement intérieur à, respectivement radialement extérieur à » signifie « dont la distance radiale mesurée depuis de l'axe de rotation du pneumatique est inférieure à, respectivement supérieure à ».

Dans le cas de véhicules, notamment destinés à des usages dans des mines ou carrières pour le transport de charges, les difficultés d'accès et les exigences de rendement conduisent les fabricants de ces véhicules à augmenter leur capacité de charge. Il s'ensuit que les véhicules sont de plus en plus grands et donc eux-mêmes de plus en plus lourds et peuvent transporter une charge de plus en plus importante. Les masses actuelles de ces véhicules peuvent atteindre plusieurs centaines de tonnes et il en est de même pour la charge à transporter ; la masse globale peut atteindre jusqu'à 600 tonnes.

Les pneumatiques sont en conséquence de plus en plus sollicités. Ils doivent tout à la fois présenter de bonnes performances en termes d'usure, être capables de transmettre les couples nécessaires et supporter les agressions notamment du fait des cailloux rencontrés sur les pistes.

Le document FR 1445678 propose ainsi de choisir des matériaux différents selon la direction axiale pour former la bande de roulement. La partie centrale peut être constituée d'un matériau résistant mieux à l'usure que les parties latérales.

Les matériaux résistant à l'usure pénalisent le plus souvent les propriétés hystérétiques. Il est ainsi encore connu de réaliser la bande de roulement d'un pneumatique par une superposition radiale de deux matériaux différents pour obtenir un compromis des propriétés d'usure et d'hystérèse satisfaisant pour les applications envisagées.

De tels pneumatiques sont par exemple décrits dans le document US 6,247,512. Ce document décrit la superposition de deux couches de matériaux pour former la bande de roulement, le matériau externe venant au contact du sol étant notamment plus performant en termes d'usure alors que le matériau interne présente des propriétés hystérétiques permettant de limiter les montées en température du pneumatique dans la zone du sommet.

Des pneumatiques comportant des combinaisons de matériaux différents dans des couches superposées ou bien répartis axialement dans ces mêmes couches sont encore décrits dans les documents FR 2 952 855, EP 1 431 078, EP 0 798 142 et EP 2 067 637.

Pour ce type de pneumatiques, les sculptures présentes sur la bande de roulement peuvent également varier selon la direction axiale ; il est ainsi connu d'avoir un taux d'entaillement inférieur dans la partie centrale pour assurer les passages de couples et également éviter les agressions dans la partie centrale où les cailloux sont plus difficiles à évacuer.

Le taux d'entaillement de la bande de roulement est défini selon l'invention par le rapport de la surface d'incisions ou de rainures sur la surface totale de la bande de roulement. Le taux d'entaillement d'une partie de la bande de roulement est ainsi défini selon l'invention par le rapport de la surface d'incisions ou de rainures, présentes sur ladite partie de la bande de roulement, sur la surface totale de ladite partie de la bande de roulement.

Les inventeurs se sont donnés pour mission de fournir des pneumatiques présentant un compromis encore améliorer entre les différentes performances d'usure, de résistance aux agressions et d'endurance.

Ce but a été atteint selon l'invention par un pneumatique, à armature de carcasse radiale, comprenant une armature de sommet, elle-même coiffée radialement d'une bande de roulement réunie à deux bourrelets par l'intermédiaire de deux flancs, ladite bande de roulement comprenant au moins deux couches de mélanges élastomériques radialement superposées et présentant un taux d'entaillement inférieur dans sa partie centrale par rapport aux parties axialement extérieures, une première couche, de mélanges élastomériques, de la bande de roulement étant constituée d'un premier mélange élastomérique chargé formant une partie s'étendant au moins dans la zone du plan équatorial et d'au moins deux parties axialement extérieures formées d'un deuxième mélange élastomérique, le premier mélange élastomérique présentant une note Z de macro dispersion supérieure à 55, le premier mélange et le deuxième mélange présentant une valeur maximale de tan($\delta$), noté tan($\delta$)max, inférieure à 0.110, le module complexe de cisaillement dynamique G* 1% à 100°C du deuxième mélange élastomérique présentant une valeur au moins 10 % supérieure à celle du module complexe de cisaillement dynamique G* 1% à 100°C du premier mélange élastomérique, une deuxième couche de la bande de roulement, radialement extérieure à ladite première couche, étant constituée d'un troisième mélange élastomérique dont le module complexe de cisaillement dynamique G* 1% à 100°C présente une valeur au moins 10 % supérieure à celle du module complexe de cisaillement dynamique G* 1% à 100°C du premier mélange élastomérique et l'allongement à la rupture selon une mesure de déchirabilité à 100°C du troisième mélange élastomérique présentant une valeur au moins 10 % supérieure à celles des allongements à la rupture selon une mesure de déchirabilité à 100°C des premier et deuxième mélanges élastomériques.

Une note Z de macro dispersion supérieure à 55 d'un mélange élastomérique chargé signifie que la charge est dispersée dans la matrice élastomère de la composition avec une note de dispersion Z supérieure ou égale à 55.

Dans la présente description, la dispersion de charge dans une matrice élastomère est caractérisée par la note Z, qui est mesurée, après réticulation, selon la méthode décrite par S. Otto et Al dans Kautschuk Gummi Kunststoffe, 58 Jahrgang, NR 7-8/2005, en accord avec la norme ISO 11345.

Le calcul de la note Z est basé sur le pourcentage de surface dans laquelle la charge n'est pas dispersée (« % surface non dispersée »), telle que mesurée par l'appareil « disperGRADER+ » fourni avec son mode opératoire et son logiciel d'exploitation « disperDATA » par la société Dynisco selon l'équation :

$$Z= 100 - (\% \text{ surface non dispersée}) /0.35$$

Le pourcentage de surface non dispersée est, quant à lui, mesuré grâce à une caméra observant la surface de l'échantillon sous une lumière incidente à 30°. Les points clairs sont associés à de la charge et à des agglomérats, tandis que les points foncés sont associés à la matrice de caoutchouc ; un traitement numérique transforme l'image en une image noir et blanche, et permet la détermination du pourcentage de surface non dispersée, telle que décrite par S.Otto dans le document précité.

Plus la note Z est haute, meilleure est la dispersion de la charge dans la matrice en caoutchouc (une note Z de 100 correspondant à une dispersion parfaite et une note Z de 0 à une dispersion médiocre). On considèrera qu'une note Z supérieure ou égale à 55 correspond à une dispersion satisfaisante de la charge dans la matrice élastomère. Notamment dans le cas de charge renforçante constituée d'un coupage de noir de carbone et d'une charge blanche, une note Z supérieure ou égale à 55 correspond à une bonne dispersion de la charge dans la matrice élastomère.

Les mélanges élastomériques constituant la bande de roulement sont préparés selon des méthodes connues.

Afin d'atteindre une note Z de macrodispersion supérieure à 55, le mélange élastomérique constituant la partie radialement extérieure peut avantageusement être préparé par formation d'un mélange maître d'élastomère diénique et de charge renforçante.

Au sens de l'invention, on entend par « mélange maître » (couramment désigné par son nom anglais « masterbatch »), un composite à base d'élastomère dans lequel a été introduite une charge.

Il existe différentes méthodes pour obtenir un mélange maître d'élastomère diénique et de charge renforçante. En particulier un type de solution consiste, pour améliorer la dispersion de la charge dans la matrice élastomère, à procéder au mélange de l'élastomère et de la charge en phase « liquide ». Pour ce faire, on a fait appel à un élastomère sous forme de latex qui se présente sous forme de particules d'élastomère dispersées dans l'eau, et à une dispersion aqueuse de la charge, c'est-à-dire une charge dispersée dans de l'eau, couramment appelée « slurry ».

Ainsi, selon une des variantes de l'invention, le mélange maître est obtenu par mélangeage en phase liquide à partir d'un latex d'élastomère diénique comprenant du caoutchouc naturel et d'une dispersion aqueuse d'une charge comprenant du noir de carbone.

Plus préférentiellement encore le mélange maître selon l'invention est obtenu selon les étapes de procédé suivantes, permettant l'obtention d'une très bonne dispersion de la charge dans la matrice élastomère:

- alimenter avec un premier flux continu d'un latex d'élastomère diénique une zone de mélange d'un réacteur de coagulation définissant une zone allongée de coagulation s'étendant entre la zone de mélange et une sortie,

- alimenter ladite zone de mélange du réacteur de coagulation avec un second flux continu d'un fluide comprenant une charge sous pression pour former un mélange avec le latex d'élastomère en mélangeant le premier fluide et le second fluide dans la zone de mélange de manière suffisamment énergique pour coaguler le latex d'élastomère avec la charge avant la sortie, ledit mélange s'écoulant comme un flux continu vers la zone de sortie et ladite charge étant susceptible de coaguler le latex d'élastomère,,

- récupérer à la sortie du réacteur le coagulum obtenu précédemment sous forme d'un flux continu et le sécher afin de récupérer le mélange maître.

Un tel procédé de préparation d'un mélange maître en phase liquide est par exemple décrit dans le document WO 97/36724 ou bien dans le document WO 99/16600.

Le facteur de perte tan($\delta$) est une propriété dynamique de la couche de mélange caoutchouteux. Il est mesuré sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm$^2$ de section), soumis à une sollicitation sinusoïdale en cisaillement simple alterné, à la fréquence de 10Hz, à une température de 100°C. On effectue un balayage en amplitude de déformation de 0,1 à 50% (cycle aller), puis de 50% à 1% (cycle retour). Les résultats exploités sont le module complexe de cisaillement dynamique (G*) et le facteur de perte tan($\delta$). Pour le cycle retour, on indique la valeur maximale de tan($\delta$) observée, noté tan($\delta$)$_{max}$.

La résistance au roulement est la résistance qui apparaît lorsque le pneumatique roule et révèle la montée en température dudit pneumatique. Elle est ainsi représentée par les pertes hystérétiques liées à la déformation du pneumatique durant une révolution. Les valeurs de tan($\delta$) des matériaux utilisés sont mesurées à 10Hz entre 30 et 100°C pour intégrer l'effet des différentes fréquences de déformation induites par la révolution du pneumatique. La valeur de tan($\delta$) à 100°C correspond ainsi à un indicateur de la résistance au roulement du pneumatique en roulage.

Les différentes mesures sont effectuées sur des pneumatiques neufs, n'ayant encore effectué aucun roulage.

Selon une réalisation préférée de l'invention, le taux d'entaillement de la partie centrale de la bande de roulement est compris entre 2 et 15 %, et de préférence inférieur à 10 %.

De préférence encore, le taux d'entaillement des parties axialement extérieures de la bande de roulement est compris entre 20 et 40 % et de préférence inférieur à 30 %.

Les inventeurs ont su mettre en évidence que la bande de roulement constituée d'au moins deux couches radialement superposées, la première couche radialement intérieure étant formée de la combinaison d'un premier mélange élastomérique chargé présentant une note Z de macro dispersion supérieure à 55, comme matériau de la partie centrale de la couche de la bande de roulement coïncidant au moins en partie avec la zone de taux d'entaillement le plus faible et d'un deuxième mélange élastomérique présentant une valeur du module complexe de cisaillement dynamique G* 1% à 100°C au moins 10 % supérieure à celle du module complexe de cisaillement dynamique G* 1% à 100°C du premier mélange élastomérique comme matériau des parties axialement extérieures de la bande de roulement coïncidant au moins en partie avec la zone de taux d'entaillement le plus élevé et d'une deuxième couche venant au contact du sol étant constituée d'un troisième mélange élastomérique dont le module complexe de cisaillement dynamique G* 1% à 100°C présente une valeur au moins 10 % supérieure à celle du premier mélange élastomérique et l'allongement à la rupture selon une mesure de déchirabilité à 100°C du troisième mélange élastomérique présentant une valeur au moins 10 % supérieure à celles des allongements à la rupture selon une mesure de déchirabilité à 100°C des premier et deuxième mélanges élastomériques conduit à un compromis entre les propriétés de résistance à l'usure et la résistance aux agressions, tout en favorisant la transmission des couples.

En effet, comme évoqué précédemment, le taux d'entaillement au centre de la bande de roulement est réduit par rapport aux parties axialement extérieures. Cette réduction du taux d'entaillement dans la partie centrale de la bande de roulement permet de préserver l'armature sommet des agressions, l'évacuation des cailloux étant notamment délicate dans cette partie centrale de la bande de roulement.

Le choix d'une deuxième couche radialement la plus extérieure constituée d'un troisième mélange élastomérique dont le module complexe de cisaillement dynamique G* 1% à 100°C présente une valeur au moins 10 % supérieure à celle du premier mélange élastomérique de la couche radialement intérieure et l'allongement à la rupture selon une mesure de déchirabilité à 100°C du troisième mélange élastomérique présentant une valeur au moins 10 % supérieure à celles des allongements à la rupture selon une mesure de déchirabilité à 100°C des premier et deuxième mélanges élastomériques de la couche radialement intérieure contribue à une meilleure résistance aux agressions du pneumatique sur toute la largeur de sa bande de roulement.

En effet, il semble tout d'abord que les valeurs du module complexe de cisaillement dynamique G* 1% à 100°C du troisième mélange élastomérique permettent de limiter les amorces de fissures pouvant apparaître du fait de cailloux qui viennent se coincer dans la sculpture. Par ailleurs, il semble que les valeurs d'allongement à la rupture du troisième mélange élastomérique permettent de limiter la propagation des amorces de fissures pouvant apparaître du fait de la présence des cailloux. De telles propriétés du troisième mélange élastomérique lui confèrent ainsi des propriétés de cohésion favorables pour résister aux agressions.

Ensuite, le choix du premier mélange élastomérique chargé présentant une note Z de macro dispersion supérieure à 55, comme matériau de la partie centrale de la bande de roulement conduit à des propriétés en termes d'usure, notamment après usure de la deuxième couche radialement plus extérieure, particulièrement favorables pour l'usage de tels pneumatiques, les inventeurs ayant su mettre en évidence que l'usure la plus prononcée apparaissait dans la partie centrale de la bande de roulement, partie la plus sollicitée lors de passages de couples.

Le choix du deuxième mélange élastomérique présentant une valeur du module complexe de cisaillement dynamique G* 1% à 100°C au moins 10 % supérieure à celle du module complexe de cisaillement dynamique G* 1% à 100°C du premier mélange élastomérique comme matériau des parties axialement extérieures de la bande de roulement contribue par ailleurs, de la même façon qu'énoncé précédemment pour ce qui concerne le troisième mélange élastomérique, à une meilleure résistance aux agressions du pneumatiques notamment dans les parties de la bande de roulement comportant le taux d'entaillement le plus élevé.

Enfin, le choix des premier et deuxième mélange élastomérique comme matériau de la première couche radialement intérieure de la bande de roulement présentant en outre une valeur $\tan(\delta)$max inférieure à 0.110 conduit à des propriétés hystérétiques favorables à un moindre échauffement du pneumatique et ainsi une meilleure endurance de celui-ci.

Avantageusement selon l'invention, le module complexe de cisaillement dynamique G* 1% à 100°C du premier mélange élastomérique, formant une partie s'étendant au moins dans la zone du plan équatorial de la première couche de mélanges élastomériques, est supérieur à 1.4 et de préférence inférieur ou égal à 2.

Avantageusement encore selon l'invention, le module complexe de cisaillement dynamique G* 1% à 100°C du deuxième mélange élastomérique, formant lesdites au moins deux parties axialement extérieures de la première couche de mélanges élastomériques, est supérieur à 1.6 et de préférence inférieur ou égal à 2.4.

Avantageusement également selon l'invention, le module complexe de cisaillement dynamique G* 1% à 100°C du troisième mélange élastomérique, formant la deuxième couche radialement extérieure, est supérieur à 1.6 et de préférence inférieur ou égal à 2.4.

Avantageusement selon l'invention, le rapport MSA300/MSA100 du premier mélange élastomérique présente une valeur d'au moins 5 % supérieure à celle du rapport MSA300/MSA100 du deuxième mélange élastomérique.

Avantageusement selon l'invention, le rapport MSA300/MSA100 du premier mélange élastomérique présente une valeur qui diffère d'au plus 5 % de celle du rapport MSA300/MSA100 du troisième mélange élastomérique de ladite deuxième couche.

Les essais de traction permettent de déterminer les contraintes d'élasticité et les propriétés à la rupture. Ils sont effectués conformément à la norme française NF T 46-002 de septembre 1988. Un traitement des enregistrements de traction permet de tracer la courbe de module en fonction de l'allongement. Le module utilisé ici est le module sécant nominal (ou apparent) mesuré en première élongation, calculé en se ramenant à la section initiale de l'éprouvette. On mesure en première élongation les modules sécants nominaux (ou contraintes apparentes, en MPa) à 100% et 300% d'allongement notés respectivement MSA100 et MSA300. Les contraintes à la rupture (en MPa) et les allongements à la rupture (en %) sont mesurés à 23°C $\pm$ 2°C et à 100°C $\pm$ 2°C, selon la norme NF T 46- 002.

Selon un mode de réalisation préféré de l'invention, le premier mélange élastomérique formant une partie s'étendant au moins dans la zone du plan équatorial de la première couche de mélanges élastomériques comporte comme charge renforçante au moins un noir de carbone de surface spécifique BET supérieure à 100 m²/g, employé à un taux compris entre 10 et 70 pce.

De préférence encore, la charge renforçante du premier mélange élastomérique formant une partie s'étendant au moins dans la zone du plan équatorial de la première couche de mélanges élastomériques comporte comme charge renforçante un coupage de noir de carbone tel que décrit précédemment et d'une charge blanche, le taux global de charge étant compris entre 10 et 90 pce et le ratio noir de carbone sur charge blanche étant supérieur à 2.7.

Le choix des charges telles que décrites ci-dessus permet encore d'améliorer les propriétés de résistance à l'usure du premier mélange élastomérique de la première couche de mélanges élastomériques.

L'épaisseur mesurée, selon la direction radiale à l'extrémité de la couche de travail radialement la plus extérieure dans une coupe méridienne du pneumatique, de la deuxième couche de mélange élastomérique est de préférence supérieure à 15 % et de préférence encore supérieure à 100 % de l'épaisseur mesurée, selon la direction radiale à l'extrémité de la couche de travail radialement la plus extérieure dans une coupe méridienne du pneumatique, de la première couche de mélange élastomérique.

Une variante avantageuse de l'invention, prévoit encore la présence d'une couche supplémentaire d'un mélange élastomérique dans une position radialement la plus intérieure de la bande de roulement et donc au contact de l'armature de sommet du pneumatique, présentant une valeur maximale de tan($\delta$), noté tan($\delta$)max, inférieure à 0.80.

La présence de cette couche supplémentaire radialement la plus intérieure de la bande de roulement peut permettre de diminuer encore les montées en température de la bande de roulement et donc favorise les propriétés d'endurance du pneumatique.

La présence de cette couche supplémentaire radialement la plus intérieure de la bande de roulement peut encore permettre de diminuer la température de fonctionnement du pneumatique dans la zone du sommet pour permettre de baisser la résistance au roulement du pneumatique.

L'épaisseur mesurée, selon la direction radiale à l'extrémité de la couche de travail radialement la plus extérieure dans une coupe méridienne du pneumatique, de cette couche supplémentaire de mélange élastomérique est avantageusement comprise entre 15 % et 25 % de l'épaisseur mesurée, selon la direction radiale à l'extrémité de la couche de travail radialement la plus extérieure dans une coupe méridienne du pneumatique, de la bande de roulement complète.

Selon l'invention, les mesures d'épaisseurs précitées sont réalisées sur des pneumatiques à l'état neuf, n'ayant pas roulés et donc ne présentant aucune usure de la bande de roulement.

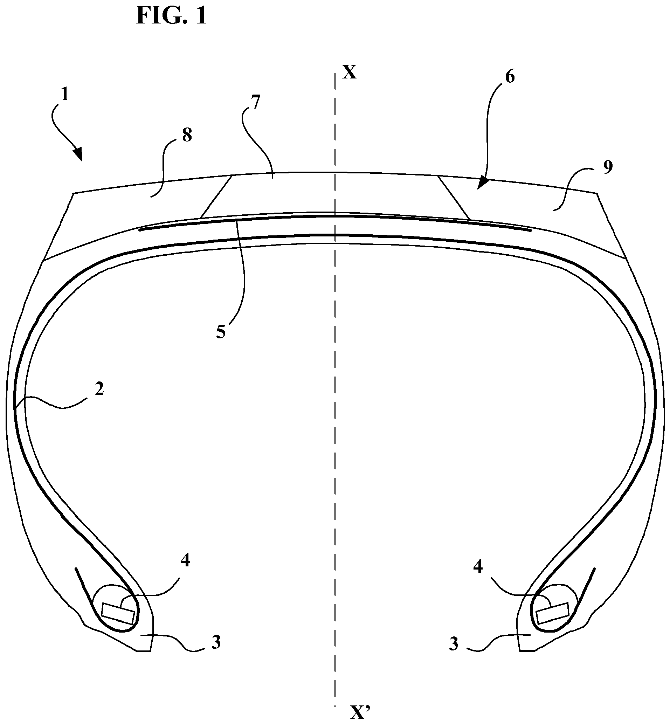

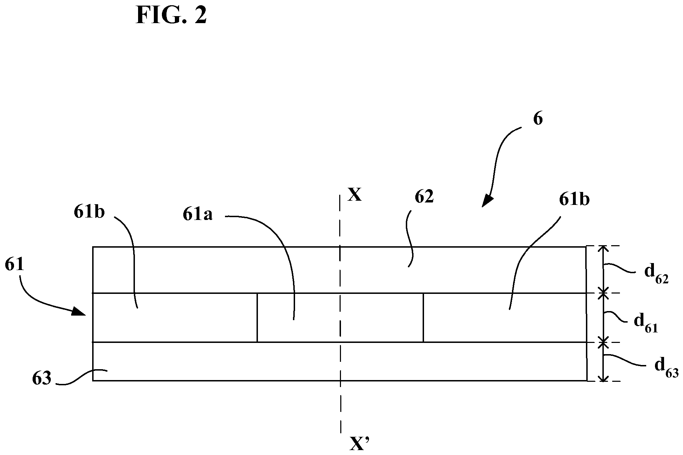

D'autres détails et caractéristiques avantageux de l'invention ressortiront ci-après de la description d'exemples de réalisation de l'invention en référence aux figures 1 et 2 qui représentent :

- figure 1, une vue méridienne d'un schéma d'un pneumatique selon l'invention,

- figure 2, une vue méridienne d'un schéma de la bande de roulement du pneumatique de la figure 1.

Les figures ne sont pas représentées à l'échelle pour en simplifier la compréhension.

La figure 1 représente schématiquement un pneumatique 1 destiné à être utilisé sur des véhicules de type Dumper. Il comprend une armature de carcasse radiale 2 ancrée dans deux bourrelets 3, autour de tringles 4. L'armature de carcasse 2 est formée d'une couche de câbles métalliques. L'armature de carcasse 2 est frettée par une armature de sommet 5, elle-même coiffée d'une bande de roulement 6. La bande de roulement 6 est conformément à l'invention constituée d'une partie centrale 7, s'étendant au moins dans la zone du plan équatorial XX', et de deux parties axialement extérieures 8, 9.

Conformément à l'invention, la partie centrale 7 de la bande de roulement 6 présente un taux d'entaillement (les sculptures de la bande de roulement ne sont pas représentées sur les figures) inférieur à celui des parties axialement extérieures 8 et 9.

La figure 2 illustre de manière très schématique la constitution de la bande de roulement 6 pour un pneumatique de dimension 53/80R63, ladite bande de roulement 6 étant conformément à l'invention constituée d'au moins deux couches de mélange élastomérique radialement superposées, une première couche de mélange élastomérique formant une couche de la bande de roulement radialement intérieure étant constituée d'un premier mélange élastomérique formant une partie s'étendant au moins dans la zone du plan équatorial et d'au moins deux parties axialement extérieures formée d'un deuxième mélange élastomérique et la couche radialement extérieure de la bande de roulement étant constitué d'un troisième mélange élastomérique.

Le taux d'entaillement dans la partie centrale de la bande de roulement 6 est égal à 3 %. Le taux d'entaillement dans les parties axialement extérieures de la bande de roulement 6 est égal à 29 %.

Conformément à l'invention, la bande de roulement 6 est constituée d'une première couche 61 formée d'un premier mélange élastomérique M1 formant une partie 61a s'étendant au moins dans la zone du plan équatorial XX' et d'au moins deux parties axialement extérieures 61b formée d'un deuxième mélange élastomérique M2.

Le mélange élastomérique M1 chargé présente une note Z de macro dispersion égale à 58 et une valeur tan($\delta$)max égale à 0.087.

Le mélange élastomérique M2 présente une valeur tan(δ)max égale à 0.098.

Le mélange élastomérique M2 présente un module complexe de cisaillement dynamique G* 1% à 100°C égale à 2.1.

Le mélange élastomérique M1 présente un module complexe de cisaillement dynamique G* 1% à 100°C égale à 1.59.

La valeur du module complexe de cisaillement dynamique G* 1% à 100°C du mélange élastomérique M2 est supérieure à celle du module complexe de cisaillement dynamique G* 1% à 100°C du mélange élastomérique M1 de 32 % et donc conformément à l'invention d'au moins 10 %.

La bande de roulement 6 comporte une deuxième couche 62 radialement extérieure et venant au contact du sol constituée d'un troisième mélange élastomérique M3.

Le mélange élastomérique M3 présente un module complexe de cisaillement dynamique G* 1% à 100°C égale à 2.13.

La valeur du module complexe de cisaillement dynamique G* 1% à 100°C du mélange élastomérique M3 est supérieure à celle du module complexe de cisaillement dynamique G* 1% à 100°C du mélange élastomérique M1 de 34 % et donc conformément à l'invention d'au moins 10 %.

L'allongement à la rupture selon une mesure de déchirabilité à 100°C du mélange élastomérique M3 est égal à 320 %.

L'allongement à la rupture selon une mesure de déchirabilité à 100°C du mélange élastomérique M1 est égal à 275 %.

L'allongement à la rupture selon une mesure de déchirabilité à 100°C du mélange élastomérique M2 est égal à 238 %.

La valeur de l'allongement à la rupture selon une mesure de déchirabilité à 100°C du mélange élastomérique M3 est supérieure à celle de l'allongement à la rupture selon une mesure de déchirabilité à 100°C du mélange élastomériques M1 de 16 % et donc conformément à l'invention d'au moins 10 %.

La valeur de l'allongement à la rupture selon une mesure de déchirabilité à 100°C du mélange élastomérique M3 est supérieure à celle de l'allongement à la rupture selon une mesure de déchirabilité à 100°C du mélange élastomériques M2 de 34 % et donc conformément à l'invention d'au moins 10 %.

La bande de roulement 6 comporte également une couche supplémentaire 63 radialement la plus intérieure constituée d'un mélange élastomérique M4 une valeur tan(δ)max égale à 0.060.

Les mélanges M1, M2, M3 et M4 sont décrits dans le tableau ci-dessous avec certaines de leurs propriétés.

| | Mélange M1 | Mélange M2 | Mélange M3 | Mélange M4 |
|---|---|---|---|---|
| NR | 100 | 100 | 100 | 100 |
| Noir N134 | 35 | | 40 | |
| Noir N234 | | 35 | | |
| Noir N347 | | | | 34 |
| Silice 170G | 10 | 10 | 15 | 10 |
| Cire ozone C32 ST | 1 | 1 | 1 | |
| Antioxydant (6PPD) | 1.5 | 2.5 | 1.5 | 1 |
| Silane sur noir | | 1 | | 2 |
| PEG (6000-20000) | 1.67 | | 2.5 | |
| Acide stéarique | 1 | 2 | 2 | 2 |
| Accélérateur CBS | 1.7 | 1.4 | 1.7 | 1.35 |
| Soufre Sol 2H | 1.2 | 1.25 | 1.2 | 1.45 |
| Oxyde de zinc | 2.7 | 3 | 3 | 4.5 |
| Note Z | 58 | 43 | 54 | 40 |
| MSA300/MSA100 | 1.33 | 1.25 | 1.3 | 1.25 |
| G* 1% retour | 1.59 | 2.1 | 2.13 | 2 |
| Allongement à la rupture (% à 100°C) | 275 | 238 | 320 | 200 |

(suite)

| | Mélange M1 | Mélange M2 | Mélange M3 | Mélange M4 |
|---|---|---|---|---|
| $\tan(\delta)_{max}$ | 0.087 | 0.098 | 0.122 | 0.060 |

L'épaisseur $d_{61}$ de la première couche 61 est égale à 26 mm.

L'épaisseur $d_{62}$ de la deuxième couche 62 est égale à 80 mm.

L'épaisseur $d_{63}$ de la troisième couche 63 est égale à 22 mm.

Le rapport de l'épaisseur $d_{62}$ de la deuxième couche 62 sur l'épaisseur $d_{61}$ de la première couche 61 est égal à 308 % et donc supérieure à 100 %.

Le rapport de l'épaisseur $d_{63}$ de la couche supplémentaire 63 sur l'épaisseur totale de la bande de roulement, c'est-à-dire sur la somme des épaisseurs ($d_{61}$ + $d_{62}$ + $d_{63}$) est égal à 17 % et donc compris entre 15 et 25 %.

Les mesures des épaisseurs sont réalisées sur une coupe méridienne d'un pneumatique à l'état neuf, selon la direction radiale à l'extrémité de la couche de travail radialement la plus extérieure.

Des essais ont été réalisés avec des véhicules équipés avec les pneumatiques selon l'invention pour évaluer leurs propriétés d'usure.

Ces essais consistent à faire rouler les pneumatiques montés sur l'essieu arrière moteur d'un véhicule. Les pneumatiques sont gonflés à une pression de 7 bars et soumis à une charge de 87.5 tonnes. Les véhicules circulent sur une piste inclinée à 14 % successivement en montée et descente pendant une durée de 1500 heures. La piste est constituée de cailloux calibrés entre 15 et 30 mm.

Ces essais sont réalisés avec des pneumatiques conformes à la représentation de la figure 2, notés P1.

Ces pneumatiques sont comparés avec des pneumatiques de référence R1 de même dimensions que les pneumatiques P1 et montés sur les mêmes véhicules. Les pneumatiques R1 sont des pneumatiques connus pour ce type d'applications.

Les bandes de roulement des pneumatiques de référence R1 comportent deux couches radialement superposés, la couche radialement extérieure étant constituée d'un premier matériau A1 et la couche radialement intérieure étant constituée d'un matériau A2.

L'épaisseur de la couche radialement extérieure constituée du matériau A1 est égale à 106 mm et l'épaisseur de la couche radialement intérieure constituée du matériau A2 est égale à 22 mm.

La constitution et les propriétés de ces matériaux sont décrites dans le tableau suivant.

| | Mélange A1 | Mélange A2 |
|---|---|---|
| NR | 100 | 100 |
| Noir N330 | 50 | |
| Noir N347 | | 34 |
| Silice 170G | | 10 |
| Cire ozone C32 ST | 1 | |
| Antioxydant (6PPD) | 1.5 | 1 |
| Silane sur noir | | 2 |
| PEG (6000-20000) | | |
| Acide stéarique | 2 | 2 |
| Accélérateur CBS | 1.7 | 1.35 |
| Soufre Sol 2H | 0.6 | 1.45 |
| Oxyde de zinc | 2 | 4.5 |
| Note Z | 48 | 40 |
| MSA300/MSA100 | 1.28 | 1.25 |
| G*1% retour | 2.01 | 2 |
| Allongement à la rupture (% à 100°C) | 230 | 200 |
| $\tan(\delta)_{max}$ | 0.135 | 0.060 |

Les résultats obtenus lors des roulages dans les conditions décrites précédemment ont mis en évidence des gains en usure compris entre 15 et 20 % avec les pneumatiques selon l'invention comparés aux pneumatiques de référence.

D'autres essais ont été réalisés avec des véhicules équipés avec les pneumatiques selon l'invention pour évaluer leurs propriétés en termes de résistance aux agressions.

Ces derniers essais consistent à faire rouler des véhicules sur une piste en boucle de 500 mètres comportant une zone de 50 mètres de long constituées de cailloux calibrés entre 145 et 200 mm. Les roulages sont effectués pendant une durée de 500 heures avec une vitesse de 15 km/h sur le circuit en dehors de la zone cailloutée et de 5 km/h sur ladite zone cailloutée.

Les pneumatiques P1 selon l'invention de dimension 53/80R63 sont gonflés à 7 bars et sont soumis à une charge de de 74 tonnes.

Après roulage les pneumatiques sont décortiqués et on compte le nombre de fissures atteignant l'armature de sommet. Le nombre de fissures atteignant l'armature de sommet traduit la plus ou moins bonne résistance aux agressions d'un pneumatique.

Comme dans le cas des premiers essais, les pneumatiques selon l'invention P1 sont comparés avec les pneumatiques de référence R1 décrits précédemment et montés respectivement sur les mêmes véhicules.

Les résultats obtenus lors de ces essais ont mis en évidence des gains en résistance aux agressions de l'ordre de 20 % avec les pneumatiques selon l'invention comparés aux pneumatiques de référence.

Les résultats de ces deux types d'essais montrent que les pneumatiques selon l'invention conduisent à un compromis entre les différentes performances d'usure et de résistance aux agressions améliorés.

**Revendications**

**1.** Pneumatique (1), à armature de carcasse radiale (2), comprenant une armature de sommet (5), elle-même coiffée radialement d'une bande de roulement (6) réunie à deux bourrelets (3) par l'intermédiaire de deux flancs, ladite bande de roulement (6) comprenant au moins deux couches (61, 62) de mélanges élastomériques radialement superposées et présentant un taux d'entaillement inférieur dans sa partie centrale (7) par rapport aux parties axialement extérieures (8, 9), **caractérisé en ce qu'**une première couche (61), de mélanges élastomériques, de la bande de roulement (6) est constituée d'un premier mélange élastomérique (M1) formant une partie (61a) s'étendant au moins dans la zone du plan équatorial et d'au moins deux parties (61b) axialement extérieures formée d'un deuxième mélange élastomérique (M2), **en ce que** le premier mélange élastomérique (M1) présente une note Z de macro dispersion supérieure à 55, **en ce que** le premier mélange (M1) et le deuxième mélange (M2) présentent une valeur maximale de $\tan(\delta)$, noté $\tan(\delta)$max, inférieure à 0.110, **en ce que** le module complexe de cisaillement dynamique G* 1% à 100°C du deuxième mélange élastomérique (M2) présente une valeur au moins 10 % supérieure à celle du module complexe de cisaillement dynamique G* 1% à 100°C du premier mélange élastomérique (M1), **en ce qu'**une deuxième couche (62) de la bande de roulement (6), radialement extérieure à ladite première couche (61), est constituée d'un troisième mélange élastomérique (M3) dont le module complexe de cisaillement dynamique G* 1% à 100°C présente une valeur au moins 10 % supérieure à celle du module complexe de cisaillement dynamique G* 1% à 100°C du premier mélange élastomérique (M1) et **en ce que** l'allongement à la rupture selon une mesure de déchirabilité à 100°C du troisième mélange élastomérique (M3) présente une valeur au moins 10 % supérieure à celles des allongements à la rupture selon une mesure de déchirabilité à 100°C des premier et deuxième mélanges élastomériques (M1, M2).

**2.** Pneumatique (1) selon la revendication 1, **caractérisé en ce que** le rapport MSA300/MSA100, rapport des modules sécants nominaux à 300% et 100% d'allongement en première élongation, du premier mélange élastomérique (M1) présente une valeur au moins 5 % supérieure à celle du rapport MSA300/MSA100 du deuxième mélange élastomérique (M2).

**3.** Pneumatique (1) selon la revendication 1 ou 2, **caractérisé en ce que** le rapport MSA300/MSA100, rapport des modules sécants nominaux à 300% et 100% d'allongement en première élongation, du premier mélange élastomérique (M1) présente une valeur qui diffère d'au plus 5 % de celle du rapport MSA300/MSA100 du troisième mélange élastomérique (M3) de ladite deuxième couche (62).

**4.** Pneumatique (1) selon l'une des revendications 1 à 3, **caractérisé en ce que** le premier mélange élastomérique (M1) comporte comme charge renforçante au moins du noir de carbone employé à un taux compris entre 10 et 70 pce, et **en ce que** le noir de carbone présente une surface spécifique BET supérieure à 100 $m^2$/g.

5. Pneumatique (1) selon la revendication 1 à 4, **caractérisé en ce que** le premier mélange élastomérique (M1) comporte comme charge renforçante un coupage de noir de carbone, de surface spécifique BET supérieure à 100 $m^2$/g, et d'une charge blanche, **en ce que** la charge renforçante est employée à un taux compris entre 10 et 90 pce, et **en ce que** le ratio de noir de carbone sur charge blanche est supérieur à 2.7.

6. Pneumatique (1) selon l'une des revendications 1 à 5, **caractérisé en ce que** le module complexe de cisaillement dynamique G* 1% à 100°C du deuxième mélange (M2) est supérieur à 1.6 et de préférence inférieur ou égal à 2.4.

7. Pneumatique (1) selon l'une des revendications 1 à 6, **caractérisé en ce que** le module complexe de cisaillement dynamique G* 1% à 100°C du premier mélange (M1) est supérieur à 1.4 et de préférence inférieur ou égal à 2.

8. Pneumatique (1) selon l'une des revendications 1 à 7, **caractérisé en ce que** le module complexe de cisaillement dynamique G* 1% à 100°C du troisième mélange (M3) est supérieur à 1.6 et de préférence inférieur ou égal à 2.4.

9. Pneumatique (1) selon l'une des revendications précédentes, **caractérisé en ce que** l'épaisseur mesurée, selon la direction radiale à l'extrémité de la couche de travail radialement la plus extérieure dans une coupe méridienne du pneumatique, de la deuxième couche (62) de mélange élastomérique est supérieure à 15 % de l'épaisseur mesurée, selon la direction radiale à l'extrémité de la couche de travail radialement la plus extérieure dans une coupe méridienne du pneumatique, de la première couche (61) de mélange élastomérique.

10. Pneumatique (1) selon l'une des revendications précédentes, **caractérisé en ce que** ledit pneumatique comprend une couche supplémentaire (63) d'un mélange élastomérique (M4) dans une position radialement la plus intérieure de la bande de roulement (6) et **en ce que** le mélange élastomérique (M4) de ladite couche supplémentaire (63) présente une valeur maximale de tan($\delta$), noté tan($\delta$)max, inférieure à 0.80.

**Patentansprüche**

1. Luftreifen (1) mit radialer Karkassenbewehrung (2), der eine Scheitelbewehrung (5) enthält, die selbst radial von einem Laufstreifen (6) überdeckt wird, der mittels zweier Flanken mit zwei Wülsten (3) verbunden ist, wobei der Laufstreifen mindestens zwei radial übereinander angeordnete Schichten (61, 62) von Elastomermischungen enthält und in seinem zentralen Bereich (7) im Vergleich mit den axial äußeren Bereichen (8, 9) einen niedrigeren Einkerbungsgrad aufweist, **dadurch gekennzeichnet, dass** eine erste Schicht (61) von Elastomermischungen des Laufstreifens (6) aus einer ersten Elastomermischung (M1), die einen Bereich (61a) bildet, der sich mindestens in der Zone der Äquatorialebene erstreckt, und aus mindestens zwei axial äußeren Bereichen (61b) besteht, die aus einer zweiten Elastomermischung (M2) gebildet werden, dass die erste Elastomermischung (M1) eine Bewertung Z der Makrodispersion höher als 55 aufweist, dass die erste Mischung (M1) und die zweite Mischung (M2) eine maximalen Wert von tan($\delta$), mit tan($\delta$)max bezeichnet, niedriger als 0.110 aufweisen, dass der dynamische komplexe Schermodul G*1% bei 100°C der zweiten Elastomermischung (M2) einen Wert mindestens 10% höher als derjenige des dynamischen komplexen Schermoduls G*1% bei 100°C der ersten Elastomermischung (M1) aufweist, dass eine zweite Schicht (62) des Laufstreifens (6), radial außen bezüglich der ersten Schicht (61), aus einer dritten Elastomermischung (M3) besteht, deren dynamischer komplexer Schermodul G*1% bei 100°C einen Wert mindestens 10% höher als derjenige des dynamischen komplexen Schermoduls G*1% bei 100°C der ersten Elastomermischung (M1) aufweist, und dass die Bruchdehnung gemäß einem Zerreißbarkeitsmaß bei 100°C der dritten Elastomermischung (M3) einen Wert mindestens 10% höher als diejenigen der Bruchdehnungen gemäß einem Zerreißbarkeitsmaß bei 100°C der ersten und zweiten Elastomermischungen (M1, M2) aufweist.

2. Luftreifen (1) nach Anspruch 1, **dadurch gekennzeichnet, dass** das Verhältnis MSA300/MSA100, Verhältnis der nominalen Sekantenmodule bei 300% und 100% Dehnung in erster Verlängerung, der ersten Elastomermischung (M1) einen Wert mindestens 5% höher als derjenige des Verhältnisses MSA300/MSA100 der zweiten Elastomermischung (M2) aufweist.

3. Luftreifen (1) nach Anspruch 1 oder 2, **dadurch gekennzeichnet, dass** das Verhältnis MSA300/MSA100, Verhältnis der nominalen Sekantenmodule bei 300% und 100% Dehnung in erster Verlängerung, der ersten Elastomermischung (M1) einen Wert aufweist, der sich höchstens um 5% von demjenigen des Verhältnisses MSA300/MSA100 der dritten Elastomermischung (M3) der zweiten Schicht (62) unterscheidet.

4. Luftreifen (1) nach einem der Ansprüche 1 bis 3, **dadurch gekennzeichnet, dass** die erste Elastomermischung (M1) als verstärkenden Füllstoff mindestens Ruß aufweist, der in einem Anteil zwischen 10 und 70 pce verwendet wird, und dass der Ruß eine spezifische Oberfläche BET größer als 100 m$^2$/g aufweist.

5. Luftreifen (1) nach Anspruch 1 bis 4, **dadurch gekennzeichnet, dass** die erste Elastomermischung (M1) als verstärkenden Füllstoff einen Verschnitt von Ruß mit einer spezifischen Oberfläche BET größer als 100 m$^2$/g und einem weißen Füllstoff aufweist, dass der verstärkende Füllstoff in einem Anteil zwischen 10 und 90 pce verwendet wird, und dass das Verhältnis von Ruß zu weißem Füllstoff höher als 2.7 ist.

6. Luftreifen (1) nach einem der Ansprüche 1 bis 5, **dadurch gekennzeichnet, dass** der dynamische komplexe Schermodul G*1% bei 100°C der zweiten Mischung (M2) höher als 1.6 und vorzugsweise niedriger als oder gleich 2.4 ist.

7. Luftreifen (1) nach einem der Ansprüche 1 bis 6, **dadurch gekennzeichnet, dass** der dynamische komplexe Schermodul G*1 % bei 100°C der ersten Mischung (M1) höher als 1.4 und vorzugsweise niedriger als oder gleich 2 ist.

8. Luftreifen (1) nach einem der Ansprüche 1 bis 7, **dadurch gekennzeichnet, dass** der dynamische komplexe Schermodul G*1% bei 100°C der dritten Mischung (M3) höher als 1.6 und vorzugsweise niedriger als oder gleich 2.4 ist.

9. Luftreifen (1) nach einem der vorhergehenden Ansprüche, **dadurch gekennzeichnet, dass** die gemäß der radialen Richtung am Ende der radial am weitesten außen liegenden Arbeitsschicht in einem Meridianschnitt des Luftreifens gemessene Dicke der zweiten Schicht (62) aus Elastomermischung größer als 15% der gemäß der radialen Richtung am Ende der radial am weitesten außen liegenden Arbeitsschicht in einem Meridianschnitt des Luftreifens gemessene Dicke der ersten Schicht (61) aus Elastomermischung ist.

10. Luftreifen (1) nach einem der vorhergehenden Ansprüche, **dadurch gekennzeichnet, dass** der Luftreifen eine zusätzliche Schicht (63) einer Elastomermischung (M4) in einer radial am weitesten innen liegenden Stellung des Laufstreifens (6) enthält, und dass die Elastomermischung (M4) der zusätzlichen Schicht (63) einen maximalen Wert von tan (δ), mit tan(δ)max bezeichnet, niedriger als 0.80 aufweist.

## Claims

1. Tyre (1) with a radial carcass reinforcement (2), comprising a crown reinforcement (5), itself capped radially by a tread (6) connected to two beads (3) by two sidewalls, the said tread (6) comprising at least two layers (61, 62) of blended elastomeric compounds that are radially superposed and have a voids ratio that is lower in the central part (7) than at the axially outer parts (8, 9), **characterized in that** a first layer (61) of blended elastomeric compounds of the tread (6) is made up of a first blended elastomeric compound (M1) forming a part (61a) extending at least into the region of the equatorial plane and of at least two axially outer parts (61b) formed of a second blended elastomeric compound (M2), **in that** the first blended elastomeric compound (M1) has a macro dispersion Z-value higher than 55, **in that** the first blended compound (M1) and the second blended compound (M2) have a maximum tan(δ) value, denoted tan(δ)max, lower than 0.110, **in that** the complex dynamic shear modulus G* 1% at 100°C of the second blended elastomeric compound (M2) has a value at least 10% higher than that of the complex dynamic shear modulus G* 1% at 100°C of the first blended elastomeric compound (M1), **in that** a second layer (62) of the tread (6), radially on the outside of the said first layer (61), is made up of a third blended elastomeric compound (M3) of which the complex dynamic shear modulus G* 1% at 100°C has a value at least 10% higher than that of the complex dynamic shear modulus G* 1% at 100°C of the first blended elastomeric compound (M1), and **in that** the elongation at break of the third blended elastomeric compound (M3) in a tearability test at 100°C has a value at least 10% higher than those of the elongations at break of the first and second blended elastomeric compounds (M1, M2) in a tearability test at 100°C.

2. Tyre (1) according to Claim 1, **characterized in that** the ratio MSA300/MSA100, the ratio of the nominal secant modules with 300% and 100% of lengthening in first elongation, of the first blended elastomeric compound (M1) has a value at least 5% higher than that of the ratio MSA300/MSA100 of the second blended elastomeric compound (M2).

3. Tyre (1) according to Claim 1 or 2, **characterized in that** the ratio MSA300/MSA100, the ratio of the nominal secant modules with 300% and 100% of lengthening in first elongation of the first blended elastomeric compound (M1) has a value which differs by at most 5% from that of the ratio MSA300/MSA100 of the third blended elastomeric compound (M3) of the said second layer.

4. Tyre (1) according to one of Claims 1 to 3, **characterized in that** the first blended elastomeric compound (M1) contains, by way of reinforcing filler, at least carbon black used at a content of between 10 and 70 phr, and **in that** the carbon black has a BET specific surface area higher than 100 m$^2$/g.

5. Tyre (1) according to Claim 1 to 4, **characterized in that** the first blended elastomeric compound (M1) contains, by way of a cut of carbon black, with a BET specific surface area higher than 100 m$^2$/g, and of a white filler, **in that** the reinforcing filler is used at a content of between 10 and 90 phr, and **in that** the ratio of carbon black to white filler is higher than 2.7.

6. Tyre (1) according to one of Claims 1 to 5, **characterized in that** the complex dynamic shear modulus G* 1% at 100°C of the second blended compound (M2) is higher than 1.6 and is preferably 2.4 or lower.

7. Tyre (1) according to one of Claims 1 to 6, **characterized in that** the complex dynamic shear modulus G* 1% at 100°C of the first blended compound (M1) is higher than 1.4 and is preferably 2 or lower.

8. Tyre (1) according to one of Claims 1 to 7, **characterized in that** the complex dynamic shear modulus G* 1% at 100°C of the third blended compound (M3) is higher than 1.6 and is preferably 2.4 or lower.

9. Tyre (1) according to one of the preceding claims, **characterized in that** the thickness, measured in the radial direction at the end of what in a meridian section of the tyre is the radially outermost working layer, of the second layer (62) of blended elastomeric compound is greater than 15% of the thickness, measured in the radial direction at the end of what in a meridian section of the tyre is the radially outermost working layer, of the first layer (61) of blended elastomeric compound.

10. Tyre (1) according to one of the preceding claims, **characterized in that** the said tyre comprises an additional layer (63) of a blended elastomeric compound (M4) in a radially innermost position of the tread (6), and **in that** the blended elastomeric compound (M4) of the said additional layer (63) has a maximum tan($\delta$) value, denoted tan($\delta$)max, lower than 0.80.

**FIG. 1**

**FIG. 2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1445678
- US 6247512 B
- FR 2952855
- EP 1431078 A
- EP 0798142 A
- EP 2067637 A
- WO 9736724 A
- WO 9916600 A